# EUROPÄISCHE PATENTSCHRIFT

(11) **EP 3 039 491 B1**
(45) Veröffentlichungstag und Bekanntmachung des Hinweises auf die Patenterteilung: **25.08.2021**
(21) Anmeldenummer: 14758371.0
(22) Anmeldetag: 29.08.2014
(51) Int. Cl.: G03H 1/00, G03H 1/18, B42D 15/00, B41M 3/14, G03H 1/02, G07D 7/00, G07D 7/1205, G02B 5/32

(54) **VERFAHREN ZUM DEZENTRALEN MARKIEREN EINES SICHERHEITSDOKUMENTS**
METHOD FOR MARKING A SECURITY DOCUMENT IN A DECENTRALIZED MANNER
PROCÉDÉ DE MARQUAGE DÉCENTRALISÉ D'UN DOCUMENT DE SÉCURITÉ

(30) Priorität: 29.08.2013 DE 102013217291
(43) Veröffentlichungstag der Anmeldung: 06.07.2016
(73) Patentinhaber: Bundesdruckerei GmbH, 10969 Berlin (DE)
(72) Erfinder: GAHLBECK, Jeffry, 15517 Fürstenwalde (DE); MATHEA, Arthur, 14199 Berlin (DE); LEOPOLD, André, 10119 Berlin (DE)
(74) Vertreter: Patentanwälte Bressel und Partner mbB
(86) Internationale Anmeldenummer: PCT/EP2014/068398
(87) Internationale Veröffentlichungsnummer: WO 2015/028618

(56) Entgegenhaltungen:
- DE-A1-102006 048 768
- DE-A1-102010 026 952
- DE-A1-102010 034 793
- GB-A- 2 452 066
- US-A- 5 856 048
- US-A- 6 066 378
- None

## Beschreibung

Die Erfindung betrifft ein Verfahren zum Markieren eines Sicherheitsdokuments, insbesondere ein Verfahren zum dezentralen Markieren eines Sicherheitsdokuments, ein neuartiges Sicherheitsdokument sowie ein Verfahren zum Verifizieren eines Sicherheitsdokuments.

Aus dem Stand der Technik ist eine Vielzahl von Sicherheitsdokumenten bekannt. Sicherheitsdokumente umfassen beispielsweise Banknoten, Wertpapiere, Personalausweise, Führerscheine, Visa, Reisepässe und andere Identifikationsdokumente, aber auch gegen Fälschung gesicherte Eintrittskarten oder Etiketten, welche jeweils mindestens ein Merkmal, ein sogenanntes Sicherheitsmerkmal, umfassen, welches eine Nachahmung, Verfälschung oder unautorisierte Herstellung deutlich erschwert oder unmöglich macht. Eine Gruppe von Sicherheitsmerkmalen umfasst ein Hologramm, welches eine in dem Hologramm gespeicherte Information bei Bestrahlung mit Licht geeigneter Wellenlänge rekonstruiert. Beispielsweise aus der EP 0 896 260 A2 ist ein Verfahren bekannt, mit dem individualisierte Hologramme in einer Massenproduktion hergestellt werden können. Hierbei wird eine Kontaktkopie eines Masterhologramms ausgeführt, welches in einem Gebiet eine Abbildung eines diffusen Streukörpers umfasst. Über einen räumlichen Lichtmodulator (Spatial Light Modulator) wird das im Kontaktkopierverfahren verwendete Licht räumlich individuell moduliert und hierdurch die individualisierte Information in das kontaktkopierte Hologramm übertragen.

Auch die EP 0 919 961 A2 beschreibt ein Sicherheitselement für Dokumente und ein Verfahren zu deren Herstellung. Ein dort beschriebenes Dokument besteht aus einem Substrat und einem Sicherheitselement, das ein optisches Gitter umfasst. Um die Kopiersicherheit zu verbessern, ist das optische Gitter ein Volumenhologramm, in das ein kinetischer Effekt eingebracht ist. Ferner ist beschrieben, dass ein örtliches Schrumpfen oder Schwellen des Filmmaterials nach dem Aufnehmen des als Volumenhologramm ausgebildeten Hologramms vorgenommen werden kann und hierdurch ein zusätzlicher Kopierschutz erreicht wird. In den geschrumpften oder geschwollenen Gebieten ändert sich ein Netzebenenabstand von das Hologramm ausbildenden Bragg'schen Netzebenen, wodurch sich eine Wellenlänge ändert, mit der das Hologramm reproduzierbar ist. Wie ein solches Schrumpfen oder Schwellen auszuführen ist, ist jedoch nicht erwähnt.

Auch die WO 2007/131496 A2 beschreibt ein Verfahren zur Herstellung von Dokumenten mit einem Hologramm sowie ein Dokument mit einem Hologramm. Vorgesehen ist, dass in einem ersten Schritt in eine Fotofolie ein Hologramm belichtet und in einem zweiten Schritt die Fotofolie auf den Dokumentträger appliziert wird. Hierbei erfolgt eine Individualisierung während des Verklebens. Um die Individualisierung zu erreichen ist vorgesehen, ein vorteilhafterweise lichthärtbares, vorzugsweise monomerhaltiges, Quellmittel im Kleber zu verwenden, das in die holografische Fotofolie mittels Maskenbelichtung partiell diffundiert und mit Licht ausgehärtet wird.

Schließlich beschreibt die WO 2008/131710 A1 eine Verwendung eines Mehrschichten-Masters mit einer teiltransparenten hologrammtragenden Oberseiten-Masterschicht, die sich auf weiteren hologrammtragenden Masterschichten befindet. Hierdurch können sich überlappende, unter verschiedenen Betrachtungswinkeln separat und vollständig sichtbare holografische Elemente in ein Volumenhologramm kopiert werden. An einem kopierten Volumenhologramm wird nachträglich eine Farbverschiebung ausgeführt, indem lichtaushärtbare Materialien zur Personalisierung verwendet werden. Auch bei dieser Anwendung erfolgt die Individualisierung dadurch, dass während der Applikation des belichteten Films auf das Personaldokument im applizierten Film Personaldaten erzeugt werden, indem ein vorzugsweise flüssiger, lichthärtender, monomerhaltiger Klebstoff zur Verklebung des Hologrammfilms auf dem Dokument verwendet wird, der zunächst durch eine personaltragende Maske belichtet wird und dann wenige Sekunden, vorzugsweise 10 bis 300 Sekunden, ein zweites Mal ohne Maske vollflächig mit Licht ausgehärtet wird, um seine Klebkraft vollständig zu erreichen. Durch die erste Maskenbelichtung wird erreicht, dass nur jene Klebstoffareale ausgehärtet werden, die sich unter den lichtdurchlässigen Maskenarealen befinden, während die unbelichteten Monomere des Klebstoffs Zeit haben, in den Polymerfilm einzudringen und diesen zu schwellen, was sich in einer Farbänderung dieser holografischen Flächen bemerkbar macht. Diese Farbänderungen tragen somit die Personalisierungsinformationen im fertig gestellten Dokument.

Alle beschriebenen Verfahren aus dem Stand der Technik sind nur geeignet, um sie in größeren Produktionsanlagen einzusetzen, in denen entweder die holografische Belichtung selbst stattfindet oder der belichtete holografische Film auf einen Dokumentenrohling oder ein Dokumentenhalbzeug appliziert wird.

Ferner ist aus der DE 10 2006 048 768 A1 ein Herstellungsverfahren für Hologramme bekannt, bei dem in einem ersten Schritt in eine Photoschicht mit Licht kurzer Wellenlänge ein Hologramm belichtet und fixiert wird und in einem zweiten Schritt ein Quellmittel auf das Hologramm aufgebracht wird. Das Quellmittel kann für einen definierten Zeitraum in die Photoschicht diffundieren, so dass die Photoschicht quillt und der Netzebenenabstand der Braggschen Netzebenen sich vergrößert. Dabei wird das Quellmittel selektiv und einer Abbildung entsprechend auf das Hologramm aufgebracht.

Aus der GB 2 452 066 A ist ein fälschungssicheres Muster in Zusammenhang mit einem Hologramm bekannt. Das fälschungssichere Muster mit dem Hologramm wird auf einem Substrat bereitgestellt durch Herstellen eines Volumenhologramms und anschließendes Bedrucken einer Oberfläche des Volumenhologramms.

Weitere Sicherheitsmerkmale auf Grundlage von Hologrammen sind aus der US 5 856 048 und der US 6 066 378 bekannt. US 5 856 048 beschreibt sowohl die Verwendung eines Quellmittels als auch die Verwendung einer mit (fluoreszierender oder im Infrarot absorbierender) Tinte gedruckten Schicht im Zusammenhang mit Hologrammen. US 6 066 378 beschreibt die Verwendung von fluoreszierenden Partikeln in einer Volumenhologrammschicht.

Der Erfindung liegt die technische Aufgabe zugrunde, ein verbessertes Verfahren zur Markierung von Dokumenten anzugeben, mit dem auch eine individuelle Markierung mit einfachen technischen Mitteln dezentral möglich ist, ein verbessertes Sicherheitsdokument anzugeben sowie ein neuartiges Verifikationsverfahren.

Der Erfindung liegt zum einen die Idee zugrunde, Dokumentenrohlinge zu schaffen, auf welche als eine oberste Schicht ein fertig belichtetes und fixiertes Hologramm appliziert ist. Dieses umfasst in einem Gebiet eine vollflächig ausgebildete Abbildung, welche bei der Reproduktion eine homogene leuchtende Fläche, vorzugsweise die Abbildung eines homogenen diffusen Streuers, zeigt. In diesem Gebiet des Hologramms kann nun durch nachträglich lokal gezielt aufgebrachte Zubereitung, welche Substanzen enthält, die geeignet für eine Diffusion in das fertig belichtete Hologramm sind, lokal eine Schwellung des Hologramms verursacht werden. Um zu verhindern, dass die eindiffundierten Substanzen ihre Position ändern oder aus dem Hologramm entweichen, werden die eindiffundierten Substanzen im Hologramm fixiert. So entstehen Bereiche, welche lokal geschwollen sind und die Rekonstruktion an bestimmten Stellen in dem einen Gebiet und somit an bestimmten Stellen des Bilds der homogenen leuchtenden Fläche verändern. Die Veränderungen sind somit bei der Rekonstruktion sichtbar und hierüber zumindest über die Positionen oder Konturen der modifizierten Stellen eine Information gespeichert.

### Definitionen

Als diffuser Streukörper wird ein Körper bezeichnete, der in Transmission oder Remission auftreffendes Licht diffus streut.

Als Druckzubereitung wird jede chemische Zubereitung bezeichnet, welche mit einer Druckvorrichtung verdruckbar ist.

Als digitale Druckvorrichtung werden Druckvorrichtungen bezeichnet, welche auf in aufeinanderfolgenden Druckschritten Druckstücke mit unterschiedlicher Information bedrucken können, ohne dass eine aufwendige Einrichtung einer die zu verdruckende Information tragenden Druckvorlage notwendig ist. Zu digitalen Druckvorrichtungen gehören u.a. Laserdrucker, aber auch Tintenstrahldrucker sowie einige Thermotransferdrucker.

Eine vollflächige Abbildung eines homogenen Streukörpers in einem Hologramm zeigt bei der Rekonstruktion eine homogen hell leuchtende Fläche. Es können auch andere Körper als Streukörper eine homogene leuchtende Fläche in einem Hologramm erzeugen.

Als homogen leuchtende Fläche bei der Rekonstruktion eines Hologramms, wird eine zusammenhängende Fläche angesehen, die in der rekonstruierten Abbildung mit einer Farbe leuchtet. Helligkeitsschwankungen können in der Fläche auftreten. Vorzugsweise ist die Helligkeit jedoch gleichmäßig, d.h. ortunabhängig von der Position in der Fläche.

Unter einem Dokumentenrohling wird ein Rohling für ein Sicherheitsdokument verstanden, welcher zumindest teilflächig als eine äußere Schicht eine Hologrammschicht mit einem Hologramm umfasst, welches noch nicht nachträglich gemäß dem hier vorgeschlagenen Verfahren markiert ist. Der Dokumentenrohling selbst kann dabei bereits elektrisch und/oder optisch personalisiert sein. Ebenso ist es möglich eine elektrische und/oder optische Personalisierung im Nachgang durchzuführen. Beispielsweise kann der Dokumentenrohling bereits ein beispielsweise farbiges Bild, insbesondere ein Portraitbild, eines künftigen Dokumenteninhabers aufweisen. In der Regel wird der Dokumentenrohling ein Verbundkörper sein, der aus mehreren Substratschichten, beispielsweise über eine Lamination oder andere Verfahren, zusammengefügt ist, und eine Vielzahl von Sicherheitselementen und Sicherheitsmerkmalen umfasst. Eine elektrische und/oder optische Beschriftung, insbesondere eine Laserbeschriftung, kann nach dem hier beschriebenen Markierungsverfahren des Hologramms ausgeführt werden. Als eine elektrische Beschriftung wird ein Einspeichern von Daten in eine elektronische Schaltung (z.B. einen Mikrochip mit einem Speicher) oder eine magnetische Schicht angesehen. Sind die Daten personenbezogen, enthalten beispielsweise persönliche Angaben über den zukünftigen Dokumenteninhaber, so wird auch vom elektrischen Personalisieren gesprochen.

### Bevorzugte Ausführungsformen

Insbesondere wird ein Verfahren zum Markieren eines Sicherheitsdokuments vorgeschlagen, welches die Schritte des Anspruchs 1 umfasst.

Durch die Verwendung einer digitalen Druckeinrichtung kann nachträglich auf einfache Weise und mit einfachen Mitteln eine Individualisierung eines Sicherheitsdokumentenrohlings zum Ausbilden eines fertigen Sicherheitsdokuments vorgenommen werden.

Erfindungsgemäß ist zum Erreichen eines noch stärkeren Schutzes gegen Fälschungen vorgesehen, dass der einen Druckzubereitung und/oder auch der mindestens einen zweiten Druckzubereitung Pigmente zugefügt sind oder werden, welche eine Lumineszenz bei geeigneter Anregung oder eine IR-Absorption oder eine IR-Remission zeigen. Hierdurch wird die aufgedruckte Information bei geeigneter Anregung bzw. Betrachtung mit IR-Licht unabhängig von der holografischen Rekonstruktion sichtbar.

Um den Sicherheitsdokumentenrohling zu schützen, ist es vorteilhaft, nach dem Fixieren der Monomere auf den Sicherheitsdokumentenrohling eine Abdeckung aufzubringen, welche zumindest in dem Bereich des Hologramms transparent für Licht der Wellenlänge ist, mit der das Hologramm rekonstruierbar ist. Das Abdecken kann beispielsweise über ein Auftragen eines Lacks, beispielsweise eines Kratzschutzlacks, erfolgen oder auch über ein Aufbringen einer weiteren Schutzfolie, welche gegebenenfalls auflaminiert oder aufgeklebt werden kann.

Das Fixieren kann auf unterschiedliche Weise erfolgen. Insgesamt ist es jeweils notwendig, eine für die Aktivierung der Vernetzung notwendige Energie gezielt in das Hologramm einzubringen. Dieses kann beispielsweise über Teilchenstrahlung oder auch über elektromagnetische Strahlung erfolgen. Als besonders geeignet hat sich UV-Strahlung erwiesen, sodass vorzugsweise das Fixieren über eine Einstrahlung von ultraviolettem Licht erfolgt.

Da eine Zeit, welche zwischen dem Auftragen der Druckzubereitung und dem anschließenden Fixieren vergeht, die Zeitspanne festlegt, innerhalb derer eine Diffusion stattfinden kann, wird hierüber die Menge und/oder die Eindringtiefe der eindiffundierenden Teilchen festgelegt. Diese legt wiederum fest, wie die Schwellung des Hologramms erfolgt. Je nachdem, wie stark das Hologramm geschwollen wird, ändert sich die für die Rekonstruktion lokal benötigte Wellenlänge bzw. ein Einstrahlwinkel, welcher eine Rekonstruktion des Hologramms lokal ermöglicht. Daher ist es möglich, eine höhere Informationsdichte zu erreichen, in dem das Bedrucken mit der Zubereitung und das Einbringen von Energie mindestens einmal iterativ wiederholt wird, wobei eine Zeitspanne zwischen dem Aufdrucken der Druckzubereitung und dem Fixieren in den Iterationszyklen unterschiedlich gewählt wird. So können Informationen gespeichert werden, welche eine unterschiedliche Farbabweichung von der homogenen einfarbigen Fläche des diffusen Streuers aufweisen. Die unterschiedliche Farbigkeit liefert die Erhöhung der Informationsdichte.

Ein ebensolcher oder ähnlicher Effekt kann auch erreicht werden, indem zusätzlich oder alternativ mindestens eine zweite Druckzubereitung mit vernetzbaren, für eine Diffusion in die Hologrammschicht geeigneten Monomeren bereitgestellt wird, welche ebenfalls mit der digitalen Druckvorrichtung verdruckbar ist, wobei die zweite Druckzubereitung vernetzbare Monomere in einer abweichenden Konzentration als in der einen Druckzubereitung und/oder andere Monomere als die eine Druckzubereitung aufweist und die bei gleicher verdruckter Menge pro Flächeneinheit bei derselben Einwirkzeit zwischen dem Aufdrucken und dem Fixieren eine stärkere oder alternativ eine schwächere Schwellung der Hologrammschicht als die eine Druckzubereitung bewirkt und Teile der Markierungsinformation mit der zweiten Druckzubereitung anstelle der ersten Druckzubereitung bedruckt werden. Es ist möglich, die beiden Druckzubereitungen in einem Arbeitsgang, beispielsweise mit einem Tintenstrahldrucker, welcher mehrere Druckzubereitungen quasi zeitgleich oder zeitgleich verdrucken kann, aufzubringen und eine unterschiedliche Schwellung aufgrund der unterschiedlichen Zusammensetzung der Druckzubereitungen erreichen, obwohl nur ein Fixierschritt ausgeführt wird.

Für eine Verifikation des Sicherheitsdokuments kann nun vorgesehen sein, dass zum einen das Hologramm in dem mindestens einen vorgegebenen Gebiet rekonstruiert wird und Stellen erfasst werden, an denen in dem mindestens einen Gebiet bei der Rekonstruktion Abweichungen von einer Abbildung eines vollflächigen monochromatisch erscheinenden diffusen Streuers auftreten und ein Vergleich der Abweichungen zeigenden Stellen mit mindestens einer Vorgabe erfolgt und ein Ableiten einer Verifikationsentscheidung basierend auf dem Vergleichsergebnis vorgenommen wird.

Erfindungsgemäß ist für das Verifikationsverfahren entsprechend Anspruch 11 vorgesehen, dass in dem mindestens einen vorgegebenen Gebiet des Hologramms eine Anregung ausführt und optisch jene Stellen erfasst werden, die bei der Anregung einen abweichenden optischen Effekt von dem Rest des Gebietes zeigen. Die Stellen, an denen bei der Anregung eine optisch abweichende Eigenschaft festgestellt wird, werden mit jenen Stellen, die bei der Hologrammrekonstruktion Abweichungen aufweisen, verglichen. Dies bedeutet, dass die Vorgabe für das Verifikationsverfahren zum Ausführen des Vergleichs in diesem Falle jene Stellen sind, die bei der Anregung eine abweichende optische Eigenschaft aufweisen. Ein Sicherheitsdokument kann somit als gültig verifiziert werden, wenn die Stellen, an denen die holografische Rekonstruktion Abweichungen zeigt, mit jenen Stellen übereinstimmen, die bei UV-Anregung eine Lumineszenz zeigen.

Die Anregung wird vorgenommen, indem eine Beleuchtung mit Licht ausgeführt wird, welches sich von sichtbarem Licht im sichtbaren Wellenlängenbereich unterscheidet. Als abweichende optische Eigenschaften treten somit eine Lumineszenz oder bei einer Anregung im IR-Bereich eine IR-Absorption oder auch eine IR-Remission auf.

Bei wieder einer Weiterbildung können der mindestens einen Druckzubereitung und der mindestens einen weiteren Druckzubereitung unterschiedliche Pigmente, insbesondere unterschiedliche Lumineszenzpigmente beigegeben sein oder werden. Es lassen sich auf diese Weise verschiedene optische Effekte für eine Nutzung als Sicherheitsmerkmal und für eine Verifikation erzeugen.

Bei einer Ausführungsform sind oder werden zumindest erste Lumineszenzpigmente und zweite Lumineszenzpigmente, welche bei einer Anregung unterschiedliche Lumineszenzeffekte zeigen, insbesondere einen abweichenden Farbeindruck hervorrufen, d.h. Lumineszenzlicht bei verschiedenen Wellenlängen oder in verschiedenen Wellenlängenbereichen emittieren, so in das Sicherheitsdokument mit den verwendeten Druckzubereitungen eingebracht, dass erste Bereiche, in die die ersten Lumineszenzpigmente eingebracht sind oder werden, über die Diffusion der Druckzubereitungen in die Hologrammschicht in gleicher Weise hinsichtlich der Rekonstruktion veränderte Bereiche sind, und zweite Bereiche, in die die zweiten Lumineszenzpigmente mittels der mindestens einen zweiten Druckzubereitung eingebracht sind oder werden, über die Diffusion der Druckzubereitungen in die Hologrammschicht in gleicher Weise hinsichtlich der Rekonstruktion verändert werden oder veränderte Bereiche sind, wobei die ersten Bereiche und die zweiten Bereiche in Bezug auf die Rekonstruktion des Hologramms unterschiedlich verändert sind, d.h. unterschiedliche Rekonstruktionseigenschaften z.B. in Bezug auf die Farbe des gebeugten Lichts aufweisen. Bei der Verifikation kann geprüft werden, ob zumindest erste und zweite Bereiche mit jeweils einheitlichen, aber verschiedenen Lumineszenzeigenschaften existieren, deren Rekonstruktionseigenschaften oder Veränderungen der Rekonstruktionseigenschaften in den entsprechenden Bereichen einheitlich verändert sind, so dass es auch erste und zweite Bereiche hinsichtlich der Rekonstruktionseigenschaften gibt und diese mit den entsprechenden Bereichen im Hinblick auf die Lumineszenzeigenschaften korrespondieren.

Bei einer Ausführungsform werden oder sind die Lumineszenzpigmente für die einzelnen Bereiche so gewählt und werden oder sind die Diffusionen in den Bereichen so ausgeführt, dass die bei der Rekonstruktion der Hologrammbereiche gebeugten Farben des Lichts jeweils mit den Farben des Lumineszenzlichts bei Lumineszenzanregung im entsprechenden Bereich übereinstimmen. Welches Maß an Übereinstimmung vorliegen muss, damit ein Dokument als echt Verifiziert wird, kann vorgegeben werden. Im einfachsten Fall reicht eine grobe Übereinstimmung in der Weise, dass eine grüne Lumineszenz und eine Beugung von grünem Licht als Übereinstimmung betrachtet werden, obwohl ein Betrachter die Farben oder hervorgerufenen Farbeindrücke gut unterscheiden kann. Ist die Lumineszenz hingegen rot und findet die Beugung im grünen Wellenlängenbereich statt, so liegt keine Übereinstimmung vor. Bei anderen Ausführungsformen kann auch eine maximal tolerierte Wellenlängenabweichung vorgegeben sein, wobei die Vorgaben für die einzelnen Lumineszenzwellenlängen oderwellenlängenbereiche unterschiedlich gewählt sein können.

Ebenso ist es möglich den verschiedenen jeweils einheitlich in Bezug auf die Rekonstruktion veränderten Bereichen Lumineszenzpigmente zuzufügen, dass bei einer Anregung der Lumineszenz für mindesten zwei Gruppen von verschiedenen Bereichen sich bei Farbaddition des gebeugten Lichts und des Lumineszenzlichts für beide Gruppen dieselbe Mischfarbe, d.h. derselbe Farbeindruck, ergibt. Beugen die Bereiche einer Gruppe im grünen Wellenlängenbereich und lumineszieren die Pigmente im roten Wellenlängenbereich, so ergibt sich ein gelber Farbeindruck bei gleichzeitiger Beugung und Lumineszenz, die andere Gruppe von Bereichen luminesziert im beispielsweise im grünen Wellenlängenbereich und beugt im roten Wellenlängenbereich. Auch hier ergibt sich ein gelber Farbeindruck. Werden Bereiche des Hologramms mit Lumineszenzpigmenten bedruckt, die nicht über eine Diffusion modifiziert werden, kann ein solcher Effekt auch mit modifizierten und nicht modifizierten Bereichen des Hologramms erzeugt werden. Eine exakte Übereinstimmung der Farbeindrücke kann nur bei genauer Kontrolle der Fertigungsbedingungen und präziser Auswahl der Lumineszenzpigmente erreicht werden. Die Überprüfung darauf, dass der einheitliche Farbeffekt nicht durch das einheitliche Verdrucken derselben Lumineszenzpigmente erreicht ist, lässt sich dadurch ausführen, dass man das Hologramm bei Anregung der Lumineszenz, beispielsweise mit UV-Licht, außerhalb der Rekonstruktionsbedingungen betrachtet. Nun müssen in dem Sicherheitsdokument die unterschiedlichen Gruppen von Bereichen deutlich anhand der verschiedenen Lumineszenzfarben erkennbar sein.

Bei einer Weiterbildung des Verfahrens ist vorgesehen, dass die mindestens eine Zubereitung angepasst an das Material der Hologrammschicht bereitgestellt wird und in einer solchen Menge aufgebracht wird, dass taktil erfassbare Erhebungen zumindest an einigen der markierten Stellen entstehen. Hierdurch wird ein zusätzliches taktiles Merkmal geschaffen, welches mit dem das Hologramm verändernden Merkmal korrespondiert. Als Vorgabe bei der Verifikation kann somit auch die ertastete Information bzw. können die durch Abtastung gewonnenen Stellen und Positionen im Bereich des einen Gebietes dienen.

Das Verfahren zur Verifikation kann ebenfalls den Schritt umfassen, Ableiten einer Information aus der räumlichen Anordnung der bei der Rekonstruktion Abweichungen aufweisenden Stellen. Dies bedeutet, dass über die räumliche Anordnung der Stellen, welche eine abweichende Rekonstruktion aufweisen, da das Hologramm an diesen Stellen lokal geschwollen ist, eine Information, beispielsweise in Form von alphanumerischen Zeichen und/oder eines Piktogramms und/oder eines Portraitbildes und/oder Schattenbildes, gespeichert werden kann.

Die Erfindung schafft somit ein Sicherheitsdokument entsprechend Anspruch 15 mit einem Dokumentkörper, der eine Hologrammschicht mit einem eingespeicherten Hologramm umfasst, wobei das Hologramm mindestens ein Gebiet umfasst, in dem vollflächig ein Abbildung eines Streukörpers gespeichert ist und wobei das Gebiet mit einer Druckzubereitung bedruckt ist, welche vernetzte Monomere aufweist, und wobei das Hologramm an den bedruckten Stellen durch in die Hologrammschicht eindiffundierte und anschließend vernetzte Monomere lokal geschwollen ist, sodass an diesen Stellen eine Abweichung bei der Rekonstruktion des vollflächigen Abbilds des Streukörpers auftritt.

Bei einer Weiterbildung weist der Dokumentkörper an jenen Stellen, an denen er mit der mindesten einen Zubereitung bedruckt ist, taktile Erhebungen auf.

Erfindungsgemäß umfasst die aufgedruckte Druckzubereitung oder umfassen die ausgedruckten Druckzubereitungen Pigmente, welche eine Lumineszenz bei geeigneter Anregung oder eine IR-Absorption oder eine IR-Remission zeigen.

Bei einer bevorzugten Ausführungsform des Sicherheitsdokuments ist über der Druckzubereitung und dem Hologramm eine Abdeckung ausgebildet, welche beispielsweise als Lack- oder Abdeckfolie ausgebildet sein kann.

Erfindungsgemäß handelt es sich bei dem Hologramm oder zumindest bei dem Hologrammbestandteil, welcher das eine Gebiet darstellt, um ein Volumenhologramm, welches aufgrund der Speicherung der Hologramminformation im Volumen der Hologrammschicht über ein Schwellen der Hologrammschicht gut beeinflussbar ist.

Besonders bevorzugt handelt es sich um ein Volumen-Reflexionshologramm, da eine Verifikation des Hologramms in Reflexion mit einer Weißlichtquelle möglich ist.

Erfindungsgemäß ist die in dem einen Gebiet bei der Rekonstruktion in der Abbildung auftretende homogene helle Fläche eine Abbildung einer Fläche, die sich in der Hologrammschichtebene befindet. In der EP 0 896 260 A2 ist eine mögliche Herstellung eines solchen Hologramms für eine Mattscheibe als Fläche beschrieben. Der Vorteil liegt darin, dass eine lokale Schwellung der Hologrammschicht auch in der Rekonstruktionsabbildung lokal Abweichungen zeigt, die mit der Stelle der Schwellung korreliert sind.

Nachfolgend wird die Erfindung unter Bezugnahme auf eine Zeichnung näher erläutert. Hierbei zeigen:
- Fig. 1: ein schematisches Ablaufdiagramm eines Verfahrens zum Markieren eines Sicherheitsdokuments;
- Fig. 2: eine schematische Darstellung eines Sicherheitsdokumentenrohlings mit einem Hologramm;
- Fig. 3: eine schematische Darstellung eines markierten Sicherheitsdokuments;
- Fig. 4: eine weitere schematische Darstellung einer weiteren Ausführungsform eines markierten Sicherheitsdokuments;
- Fig. 5: eine schematische Darstellung einer Rekonstruktion eines Sicherheitsdokuments mit einem unmarkierten Hologramm;
- Fig. 6: eine schematische Darstellung einer Rekonstruktion eines markierten Hologramms;
- Fig. 7a: eine schematische Darstellung einer Rekonstruktion eines erfindungsgemäß markierten Hologramms;
- Fig. 7b: eine schematische Darstellung der optischen Antwort eines erfindungsgemäßen Sicherheitsdokuments bei UV-Beleuchtung; und
- Fig. 8: ein schematisches Ablaufdiagramm eines Verfahrens zur Verifikation eines Sicherheitsdokuments.

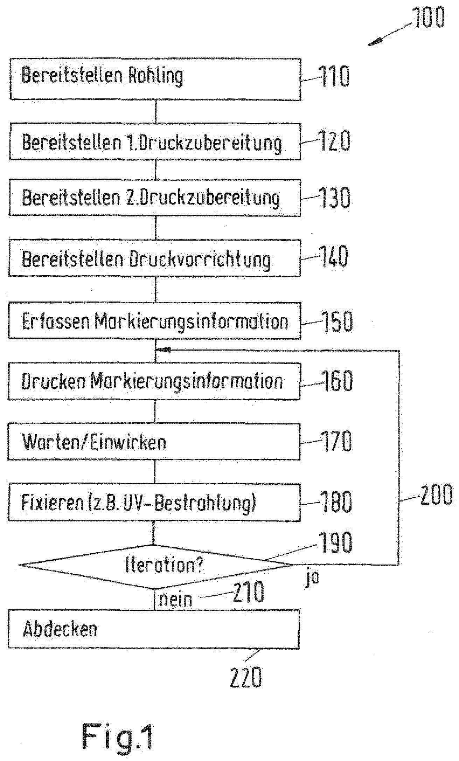

In Fig. 1 ist schematisch ein Ablaufdiagramm eines Verfahrens 100 zum Markieren eines Sicherheitsdokuments dargestellt. Zunächst wird ein Sicherheitsdokumentenrohling bereitgestellt 110, welcher ein auf ein Substrat aufgebrachtes Hologramm umfasst, welches in einem Gebiet eine Abbildung einer homogen leuchtenden Fläche, z.B. einer Fläche eines homogen leuchtenden Körpers, besonders bevorzugt eines flächigen homogenen diffusen Streuers wie einer Mattscheibe, bei der Rekonstruktion zeigt. Zusätzlich zu dem Gebiet, kann das Hologramm weitere optische Beugungsstrukturen oder holografisch gespeicherte 3D-Objekte umfassen. Wird bei der Herstellung des Sicherheitsdokumentenrohlings das Hologramm auf ein Substrat mittels eines Klebstoffes, insbesondere einen UV-vernetzbaren Klebstoffes, befestigt, so wird ein Klebstoff gewählt, dessen Bestandteile nicht zum Diffundieren in das Hologramm neigen, und ferner eine Zeitspanne zwischen dem In-Kontakt-Bringen des Hologramms mit dem Klebstoff und einem Aushärten minimiert. Ferner wird mindestens eine Druckzubereitung bereitgestellt 120, welche vernetzbare Monomere enthält, die in ein fertig belichtetes und fixiertes Hologramm bzw. die Hologrammschicht, in der das Hologramm gespeichert ist, diffundieren. Optional können eine zweite oder weitere Druckzubereitungen bereitgestellt werden 130, die ebenfalls vernetzbare Monomere für ein Eindiffundieren in die Hologrammschicht umfasst oder umfassen. Zusätzlich wird eine digitale Druckvorrichtung bereitgestellt 140, mit der die mindestens eine Druckzubereitung und, falls vorhanden, die zweite oder weitere Druckzubereitungen verdruckbar sind. Eine zweite Druckzubereitung unterscheidet sich von der mindestens einen Druckzubereitung dadurch, dass diese andere vernetzbare Monomere oder vernetzbare Monomere in einer anderen Konzentration umfasst und/oder zusätzlich weitere Bestandteile, beispielsweise Pigmente , wie die erste Druckzubereitung, umfasst, welche eine UV-anregbare Lumineszenz und/oder eine IR-Absorption und/oder eine IR-Remission zeigen.

In einem nächsten Verfahrensschritt wird eine Markierungsinformation erfasst 150. Diese gibt an, an welchen Stellen das Hologramm in dem Gebiet, welches bei der Rekonstruktion einen homogenen flächigen leuchtenden Gegenstand zeigt, markiert und verändert werden soll. Anschließend wird die Markierungsinformation mit der mindestens einen Druckzubereitung und gegebenenfalls zusätzlich mit der zweiten Druckzubereitung oder weiteren Druckzubereitungen mittels der Druckvorrichtung auf das Gebiet des Hologramms aufgedruckt 160, welches bei der Rekonstruktion einen homogenen flächigen leuchtenden Gegenstand zeigt. Die auf das Hologramm bzw. die Hologrammschicht aufgedruckte Druckzubereitung oder die aufgedruckten Druckzubereitungen enthalten Monomere, welche in die Hologrammschicht lokal eindiffundieren. Hierdurch schwillt die Hologrammschicht lokal. Um diese Diffusion zu erreichen, wird eine gewisse Zeit zwischen dem Bedrucken und einem anschließenden Fixieren 180 gewartet 170. Das Fixieren erfolgt über ein Zuführen von Energie, sodass eine Vernetzung der eindiffundierten Monomere sowie der Monomere in der Druckzubereitung stattfindet, welche noch nicht in die Hologrammschicht eindiffundiert sind. Vorzugsweise erfolgt das Fixieren über ein Einstrahlen von UV-Licht.

Sollen unterschiedliche Schwellungen erreicht werden und nur eine Druckzubereitung hierfür verwendet werden, so können die Verfahrensschritte 160 bis 180 iterativ mehrmals ausgeführt werden. Dieses ist auch möglich, wenn mehrere unterschiedliche Druckzubereitungen zeitgleich verdruckt werden. Es wird somit geprüft, ob noch ein Iterationsschritt ausgeführt werden soll 190. Die Iterationsschleife ist durch den Pfeil 200 angedeutet. Soll keine Iteration oder keine weitere Iteration ausgeführt werden 210, ist es vorteilhaft, jedoch optional, auf das Hologramm eine Abdeckung aufzubringen 220. Dies kann beispielsweise in Form eines Auftragens eines Lacks, insbesondere eines Kratzschutzlacks, welcher transparent für die Wellenlänge ist, welche zur Rekonstruktion des Hologramms zu verwenden ist, erfolgen. Alternativ kann eine Folie auf den Dokumentenrohling appliziert werden, beispielsweise verklebt oder auflaminiert werden. Ein großer Vorteil des beschriebenen Verfahrensablaufs 100 besteht darin, dass diese Markierung dezentral ausgeführt werden kann, da nur einfache technische Komponenten wie beispielsweise ein Tintenstrahldrucker und eine UV-Lampe sowie ein Laminiergerät oder eine Lackiereinrichtung benötigt werden. Eine Lackschicht kann beispielsweise auch verdruckt werden, gegebenenfalls mit demselben Tintenstrahldrucker in einem weiteren Druckschritt.

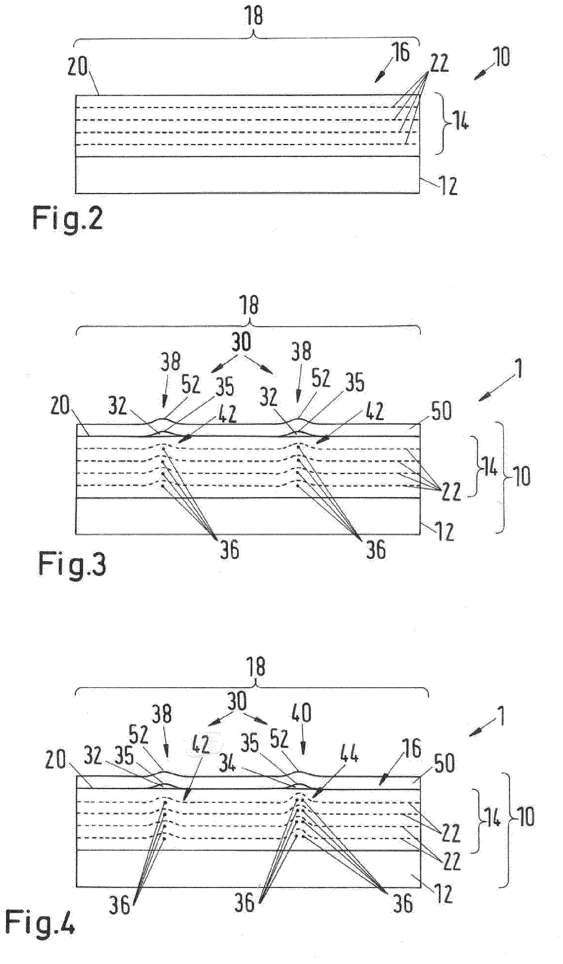

In Fig. 2 ist schematisch ein Sicherheitsdokumentenrohling 10 gezeigt. Dieser umfasst ein oder mehrere Substrate 12, auf die eine Hologrammschicht 14 aufgebracht ist. In die Hologrammschicht 14 ist ein Hologramm 16 einbelichtet, welches in einem Gebiet 18 bei der Rekonstruktion einen hellen vollflächigen homogenen leuchtenden Gegenstand rekonstruiert. Vorzugsweise handelt es sich um eine Abbildung eines diffusen Streuers. In der dargestellten Ausführungsform erstreckt sich das Gebiet 18 über den gesamten Sicherheitsdokumentenrohling 10. Dieses muss jedoch nicht der Fall sein. In das Hologramm können auch weitere Hologrammstrukturen, beispielsweise dreidimensionale Objekte, kinegrafische Strukturen oder Ähnliches, einbelichtet sein. Das Hologramm 16 ist schematisch hier parallel zur Oberfläche über Gitterebenen 22 schematisch angedeutet.

Eine Herstellung eines solchen Gebiets beispielsweise eines Abbilds eines diffusen Streuers ist ausführlich in der EP 0 896 260 A2 beschrieben. Als diffuser Streuer dient beispielsweise eine Mattscheibe. Diese wird zunächst mit Laserlicht durchstrahlt und als Transmissionshologramm in ein erstes Hologramm H₁ aufgenommen. Hierzu wird der Laserstrahl in zwei Teilstrahlen geteilt, von denen der eine die Mattscheibe passiert, der andere nicht, und beide Teilstrahlen in dem holografischen Film zur Interferenz gebracht. Anschließend wird das Hologramm H₁ der Mattscheibe rekonstruiert, und zwar so, dass das reelle Bild sich in der Ebene einer zweiten Hologrammschicht ausbildet. In dieses wird das reelle Bild der Mattscheibe als Reflexionshologramm H₂ eingeschrieben. Von dem dort beschriebenen Master können im Kontaktkopierverfahren auf einfache Weise Kopien erstellt werden, welche ebenfalls Reflexionshologramme sind und die Mattscheibe als Objekt in gleicher Weise wie der eben beschriebene Master H₂ umfassen. Ein solches Hologramm ist beispielsweise das Hologramm nach Fig. 2.

Um eine Markierung des Dokumentenrohlings 10 auszuführen, ist eine Druckzubereitung 32, welche vernetzbare Monomere 36 umfasst, die in die Hologrammschicht 14 eindiffundieren, auf das Gebiet 18 lokal aufgebracht.

In Fig. 3 ist die Markierung 30 über eine erste Druckzubereitung 32 aufgedruckt. Die eindiffundierten Monomere 36 sind über Punkte dargestellt. Zu erkennen ist, dass sich die Gitterebenen 22 lokal aufgrund der Schwellung durch die eindiffundierten Monomere 36 verformen. Die Schwellungen 42 korrespondieren mit den Stellen, an denen die mindestens eine Druckzubereitung 32 auf das Gebiet 18 des Hologramms 16 aufgedruckt ist.

Nachdem eine Eindiffusion der vernetzbaren Monomere 36 erfolgt ist, sind diese fixiert worden, indem eine Vernetzung herbeigeführt worden ist. Somit bleibt die erreichte Schwellung 42 erhalten. Um eine weitere Eindiffusion von Substanzen zu vermeiden und das Hologramm gegenüber Manipulationen zu schützen, ist auf die Oberseite 20 eine Abdeckung 50 aufgebracht. Im dargestellten Beispiel ist die Abdeckung so aufgebracht, dass aufgrund der Druckzubereitung 32 entstandene Erhebungen 35 auf dem Hologramm 16 als taktile Erhebungen 52 des Sicherheitsdokuments 1 erhalten bleiben.

In Fig. 4 ist eine weitere Ausführungsform eines Sicherheitsdokuments 1 ähnlich zu dem nach Fig. 3 gezeigt, bei dem jedoch die Markierung 30 mit einer ersten Druckzubereitung 32 und einer zweiten Druckzubereitung 34 gedruckt ist, welche eine abweichende Monomerkonzentration aufweist. In der gleichen Einwirkzeit sind somit an Stellen 40, an denen die zweite Druckzubereitung 34 aufgedruckt ist, mehr Monomere 36 in das Hologramm 16 bzw. die Hologrammschicht 14 eindiffundiert, welches über zwei Punkte zur Kennzeichnung der eindiffundierten Monomere 36 angedeutet ist. Es existieren somit Stellen 38, 40, welche eine unterschiedliche Schwellung 42, 44 aufweisen. Erneut ist auf das mit der ersten und der zweiten Druckzubereitung markierte Hologramm 16 bzw. den Dokumentenrohling 10 eine Abdeckung 50 aufgebracht, welche so aufgebracht ist, dass die durch die Druckzubereitung 32, 34 bewirkten Erhebungen 35 als taktile Erhebungen 52 des Sicherheitsdokuments 1 erhalten bleiben. Zu beachten ist, dass die Erhebungen bei dieser Ausführungsform eine selbe Höhe und Breite trotz der unterschiedlichen bewirkten Schwellung aufweisen. Es sind jedoch auch andere Ausführungsformen möglich, wo eine unterschiedliche Schwellungen 42, 44 über eine unterschiedlich große Menge an aufgebrachter Druckzubereitung erzeugt wird. Unterschiedliche Schwellungen bewirken unterschiedliche optische Eigenschaften bei der Rekonstruktion des Hologramms. An den unterschiedlich stark geschwollenen Stellen 38, 40 wird somit bei der Rekonstruktion licht unterschiedlicher Wellenlängen gebeugt und hierdurch reflektiert. Somit ist es möglich unterschiedliche farbige Markierungen zu erzeugen und auch bunte Markierungen, d.h. Markierungen 30 zu erzeugen, welche an den unterschiedlichen Stellen 38, 40 Licht verschiedener Wellenlängen beugend reflektieren und so unterschiedliche Farbeindrücke hervorrufen.

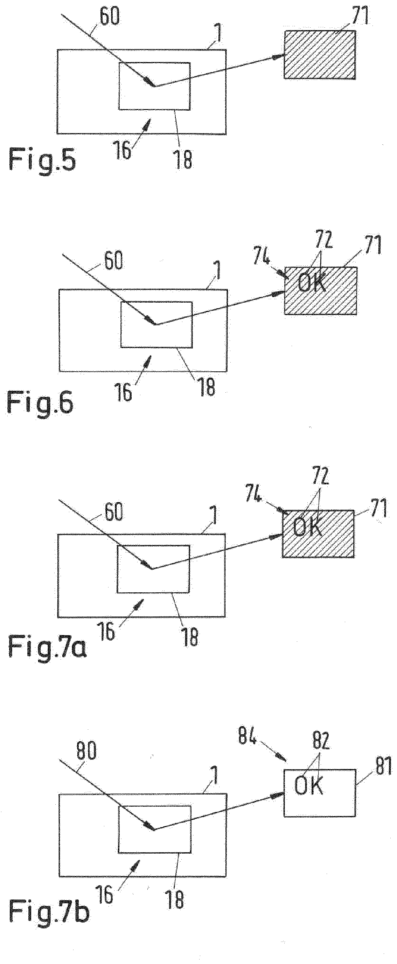

In Fig. 5 ist schematisch dargestellt, wie die Rekonstruktion des Hologramms eines unmarkierten Sicherheitsdokumentenrohlings bzw. eines unmarkierten Sicherheitsdokuments aussieht. Das Gebiet 18 des Hologramms 16 wird mit Rekonstruktionslicht 60 beleuchtet. Das rekonstruierte Gebiet 18 des Hologramms 16 erzeugt eine Abbildung einer homogen leuchtenden Fläche, die mit dem Gebiet korrespondiert. Hier sind die Fläche und das Gebiet rechteckig dargestellt, jedoch kann die Form beliebig gewählt werden, beispielsweise kreisförmig, dreieckig oder auch jede andere beliebige Außenkontur aufweisen.

In Fig. 6 ist schematisch eine holografische Rekonstruktion eines Sicherheitsdokuments 1 gezeigt, welches über aufgebrachte Druckzubereitungen und hierdurch verursachte lokale Schwellungen individualisiert ist. In der holografisch rekonstruierten Rekonstruktionsabbildung 71, welche bis auf bestimmte Stellen 72 eine homogene leuchtende Fläche bzw. ein homogenes leuchtendes Gebiet zeigt, ist hier über die Anordnung der Stellen, welche eine Abweichung bei der Rekonstruktion, beispielsweise eine veränderte Farbe bei der Rekonstruktion und/oder einen veränderten Winkel bei der Rekonstruktion, des Hologramms zeigen, eine Information gespeichert. Im dargestellten Beispiel sind die Stellen, welche eine Schwellung aufweisen, so angeordnet, dass diese zusammen die Buchstaben "OK" ergeben. "OK" ist eine Hologrammmarkierung 74.

In Fig. 7a ist ein weiteres Sicherheitsdokument schematisch dargestellt, welches holografisch rekonstruiert wird. Die Rekonstruktion gleicht der, welche in Fig. 6 gezeigt ist. Es ist somit erneut eine Hologrammmarkierung 74 "OK" zu erfassen bzw. aus den eine Abweichung bei der Rekonstruktion aufweisenden Stellen 72 abzuleiten.

In Fig. 7b wird dasselbe Dokument wie in Fig. 7a bei einer Anregung mit UV-Strahlung 80 gezeigt. Hierdurch erfolgt eine Anregung von Pigmenten, die ebenfalls erfindungsgemäß in der Druckzubereitung enthalten sind und eine Lumineszenz zeigen. Es ist eine Lumineszenzabbildung 81 zu erkennen, in der an bestimmten Stellen 82 eine Lumineszenz zu erkennen ist. Die lumineszierenden Stellen bilden gemeinsam die Buchstaben "OK", welche eine Lumineszenzmarkierung 84 darstellen. Über einen Vergleich der beiden sichtbaren Markierungen kann eine Verifikation ausgeführt werden.

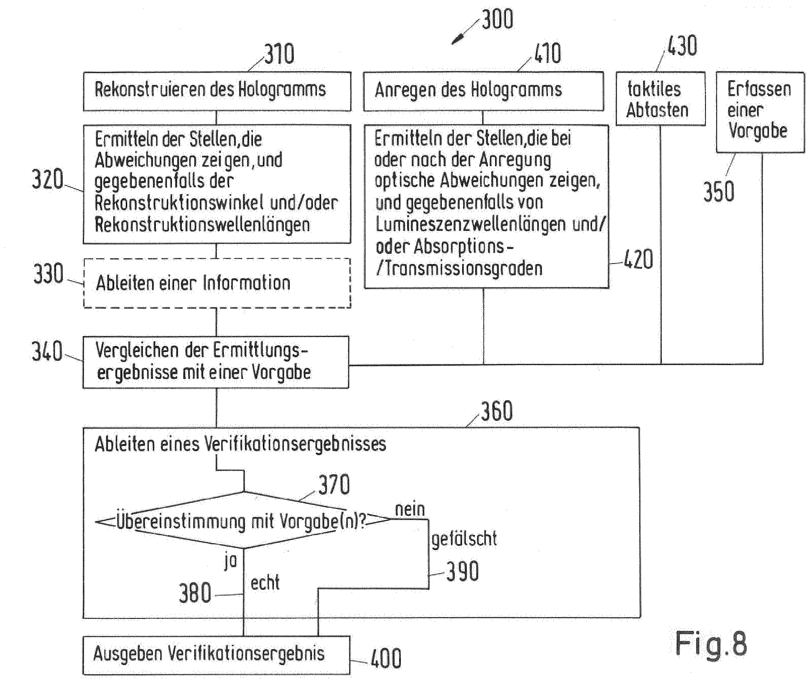

Anhand von Fig. 8 soll schematisch eine Verifikation eines markierten Sicherheitsdokuments erläutert werden. Ein solches Verifikationsverfahren 300 ist in Fig. 8 schematisch dargestellt. Zunächst wird das Hologramm 16 rekonstruiert 310. Dieses ist beispielhaft in Fig. 6 dargestellt. Aus der Rekonstruktionsabbildung 71 werden Stellen 72 ermittelt 320, die Abweichungen zeigen. Gegebenenfalls wird ein Rekonstruktionswinkel dieser Stellen 72 oder auch eine Farbe bzw. die dazugehörige Rekonstruktionswellenlänge dieser geschwollenen Stellen 72 ermittelt. Optional kann anhand der in Ordnung der Stellen eine Information abgeleitet werden 330. Ferner sieht das Verfahren vor, dass ein Vergleich der ermittelten Ergebnisse mit einer Vorgabe erfolgt 340. Diese kann beispielsweise erfasst werden 350. Im Zusammenhang mit Fig. 6 kann beispielsweise als Vorgabe erfasst werden, dass die Buchstaben "OK" in dem Hologramm 16 als geschwollene Stellen 72 ermittelbar sein sollen. Zusätzlich kann auch die Position, an der diese Buchstaben auftreten sollen, umfasst sein. Anhand des Vergleichsergebnisses wird ein Verifikationsergebnis abgeleitet 360. Hierbei kann beispielsweise eine Übereinstimmung mit den Vorgaben ermittelt werden 370. Als Ergebnisse kann die Echtheit bei Übereinstimmung 380 oder eine Fälschung bei einem Nichtübereinstimmen mit den Vorgaben 390 ermittelt werden. Schließlich wird das Verifikationsergebnis ausgegeben 400.

Die Vorgabe für den Vergleich mit den Ermittlungsergebnissen der holografischen Rekonstruktion kann erfindungsgemäß darüber erfasst werden, dass das Hologramm angeregt wird 410, beispielsweise mittels UV-Strahlung. Zusätzlich werden jene Stellen 82 ermittelt, die bei oder nach der Anregung optische Abweichungen zeigen 420, beispielsweise eine Lumineszenz.

Es kann auch zusätzlich die Lumineszenzwellenlänge, d.h. eine Farbe der Lumineszenz, oder alternativ einen Absorptions- oder Transmissionsgrad ermittelt werden, falls eine Anregung im infraroten Wellenlängenbereich erfolgt. Als zusätzliche Erfassung einer Vorgabe kann ein taktiles Abtasten erfolgen 430 und die taktil erfasste Information als Vorgabe für das Vergleichen im Verfahrensschritt 340 bzw. 370 genutzt werden.

Das Hologramm außerhalb des markierten Gebiets und das wie angegeben in dem einen Gebiet markierte Hologramm können jeweils als ein maschinenprüfbares Sicherheitsmerkmal ausgebildet sein oder werden oder als solches dienen.

Es versteht sich, dass lediglich beispielhafte Ausführungsformen der Erfindung beschrieben sind.

### Bezugszeichenliste

- 1: Sicherheitsdokument
- 10: Sicherheitsdokumentenrohling
- 12: Substrat
- 14: Hologrammschicht
- 16: Hologramm
- 18: Gebiet, in dem ein homogen leuchtender Gegenstand gespeichert ist
- 20: Oberseite
- 22: Gitterebenen
- 30: Markierung
- 32: erste Druckzubereitung
- 34: zweite Druckzubereitung
- 35: Erhebung
- 36: eindiffundierte Monomere
- 38: Stellen
- 40: Stellen
- 42: Schwellung
- 44: Schwellung
- 50: Abdeckung
- 52: taktile Erhebung
- 60: Rekonstruktionslicht
- 71: Rekonstruktionsabbildung
- 72: Stellen mit Abweichungen
- 74: Hologrammmarkierung
- 80: UV-Licht/IR-Licht
- 81: Lumineszenzbild
- 82: Stellen mit optischen Abweichungen
- 84: Lumineszenzmarkierung
- 100: Verfahren zur Markierung eines Sicherheitsdokuments
- 110-220: Verfahrensschritte
- 300: Verfahren zur Verifikation
- 310-430: Verfahrensschritte

## Patentansprüche

1. Verfahren zum Markieren eines Sicherheitsdokuments (1) umfassend die Schritte:
Bereitstellen eines Sicherheitsdokumentenrohlings (10), welcher zumindest teilflächig als eine äußerste Schicht eine Hologrammschicht (14) mit einem Hologramm (16) umfasst, wobei das Hologramm (16) mindestens ein Gebiet (18) umfasst, in dem vollflächig eine Abbildung einer homogenen leuchtenden Fläche, vorzugsweise eine Abbildung eines homogenen diffusen Streuers, gespeichert ist, wobei es sich bei dem Hologramm (16) oder zumindest bei einem Hologrammbestandteil, welcher das mindestens eine Gebiet (18) darstellt, um ein Volumenhologramm handelt,
Bereitstellen mindestens einer Druckzubereitung (32), welche UV-vernetzbare Monomere (36) umfasst, welche im unvernetzten Zustand in die fertig belichtete und fixierte Hologrammschicht (14) diffundieren,
Bereitstellen einer digitalen Druckvorrichtung, mit welcher die mindestens eine Druckzubereitung (32) verdruckbar ist,
Erfassen einer Markierungsinformation, welche angibt, an welchen Stellen (72) das Hologramm (16) in dem mindestens einen Gebiet (18) über ein Schwellen der Hologrammschicht (14) in einer eine Rekonstruktion des Hologramms (16) beeinflussenden Weise modifiziert werden soll,
Aufdrucken der mindestens einen Druckzubereitung (32) zum Schwellen der Hologrammschicht (14) auf das mindestens eine Gebiet (18) der Hologrammschicht (14) mit der digitalen Druckvorrichtung an den gemäß der Markierungsinformation angegebenen Stellen, so dass die Stellen (72) in dem mindestens einen Gebiet (18) des Hologramms (16), an denen eine Rekonstruktion des Hologramms (16) beeinflusst werden soll, mit der mindestens einen Druckzubereitung (32) bedruckt werden,
Fixieren der vernetzbaren Monomere (36) der verdruckten mindestens einen Druckzubereitung (32) durch Einbringen von Energie zumindest in das mindestens eine Gebiet (18) des Hologramms (16), wobei die mindestens eine Druckzubereitung (32) Pigmente umfasst, welche eine Lumineszenz bei geeigneter Anregung oder eine IR-Absorption oder eine IR-Remission zeigen.

2. Verfahren nach Anspruch 1, **dadurch gekennzeichnet, dass** nach dem Fixieren der Monomere (36) auf den Sicherheitsdokumentenrohling (10) eine Abdeckung (50) aufgebracht wird, welche zumindest in dem Bereich des Hologramms (16) transparent für Licht der Wellenlänge ist, mit der das Hologramm (16) rekonstruierbar ist.

3. Verfahren nach Anspruch 1 oder 2, **dadurch gekennzeichnet, dass** das Bedrucken mit der mindestens einen Druckzubereitung (32) und das Einbringen von Energie mindestens einmal iterativ wiederholt wird, wobei eine Zeitspanne zwischen dem Aufdrucken der mindestens einen Druckzubereitung (32) und dem Fixieren in den Iterationszyklen unterschiedlich gewählt wird.

4. Verfahren nach einem der Ansprüche 1 bis 3, **dadurch gekennzeichnet, dass** eine Menge der pro Flächeneinheit an unterschiedlichen Stellen (72) aufgebrachten mindestens einen Druckzubereitung (32) variiert wird.

5. Verfahren nach einem der Ansprüche 1 bis 4, **dadurch gekennzeichnet, dass** mindestens eine zweite Druckzubereitung (34) mit vernetzbaren Monomeren bereitgestellt wird, welche ebenfalls mit der digitalen Druckvorrichtung verdruckbar ist, wobei die mindestens eine zweite Druckzubereitung (34) vernetzbare Monomere (36) in einer abweichenden Konzentration als in der mindestens einen Druckzubereitung (32) und/oder andere Monomere (36) als die mindestens eine Druckzubereitung (32) aufweist und die mindestens eine zweite Druckzubereitung (34) bei gleicher verdruckter Menge pro Flächeneinheit bei derselben Einwirkungszeit zwischen dem Aufdrucken und dem Fixieren eine stärkere oder schwächere Schwellung der Hologrammschicht als die mindestens eine Druckzubereitung (32) bewirkt, und wobei die mindestens eine zweite Druckzubereitung (34) Pigmente umfasst, welche eine Lumineszenz bei geeigneter Anregung oder eine IR-Absorption oder eine IR-Remission zeigen.

6. Verfahren nach Anspruch 5, **dadurch gekennzeichnet, dass** die mindestens eine Druckzubereitung erste Lumineszenzpigmente und die mindestens eine zweite Druckzubereitung zweite Lumineszenzpigmente umfasst, wobei eine Lumineszenz der ersten Lumineszenzpigmente sich von einer Lumineszenz der zweiten Lumineszenzpigmente unterscheidet.

7. Verfahren nach Anspruch 6, **dadurch gekennzeichnet, dass** in dem mindestens einen Gebiet (18) ein oder mehrere erste Bereiche mit der mindestens einen Druckzubereitung in einer die Rekonstruktion des Hologramms (16) aufgrund des Schwellens der Hologrammschicht (14) gleichartig beeinflussenden Weise modifiziert werden und ein oder mehrere zweite Bereiche mit der mindestens einen zweiten Druckzubereitung in einer die Rekonstruktion des Hologramms (16) aufgrund des Schwellens der Hologrammschicht (14) gleichartig beeinflussenden, jedoch gegenüber dem oder den ersten Bereichen abweichenden Weise modifiziert werden.

8. Verfahren nach Anspruch 7, **dadurch gekennzeichnet, dass** die ersten Bereiche so modifiziert werden und die ersten Pigmente so gewählt werden, dass die Wellenlänge des von dem ersten Bereich oder den ersten Bereichen gebeugten Lichts im Rahmen einer für eine Verifikation vorgegebenen oder für die Verifikation vorgebbaren Toleranz mit der Wellenlänge der Lumineszenzstrahlung der ersten Pigmente übereinstimmt.

9. Verfahren nach Anspruch 7, **dadurch gekennzeichnet, dass** die ersten Bereiche so modifiziert werden und die ersten Pigmente so gewählt werden, dass das von dem ersten Bereich oder den ersten Bereichen gebeugte Licht mit der Lumineszenzstrahlung der ersten Pigmente aufgrund einer Farbaddition einen Mischfarbeindruck erzeugt wird, und die zweiten Bereiche so modifiziert werden und die zweiten Pigmente so gewählt werden, dass der von den ersten Bereichen erzeugte Mischfarbeidruck dem Mischfarbeindruck entspricht, der von dem in dem zweiten Bereich oder den zweiten Bereichen gebeugten Licht und der Lumineszenzstrahlung der zweiten Pigmente aufgrund der Farbaddition hervorgerufen wird.

10. Verfahren nach einem der Ansprüche 1 bis 9, **dadurch gekennzeichnet, dass** zumindest die mindestens eine Druckzubereitung (32) in einer solchen Menge aufgebracht wird, dass taktil erfassbare Erhebungen (52) zumindest an einigen der markierten Stellen (72) entstehen.

11. Verfahren zum Verifizieren eines gemäß dem Verfahren nach einem der Patentansprüche 1 bis 10 markierten Sicherheitsdokuments umfassend die Schritte: Rekonstruieren eines Hologramms (16) mit Licht in mindestens einem vorgegebenen Gebiet (18) und Erfassen von Stellen (72), an denen in dem mindestens einen Gebiet (18) bei der Rekonstruktion Abweichungen von einer Abbildung einer homogen leuchtenden Fläche, vorzugsweise einer monochromatischen Fläche eines beleuchteten oder durchleuchteten diffusen Streuers, aufgrund eines Schwellen der Hologrammschicht (14) auftreten,
Vergleichen der Abweichungen zeigenden Stellen (72) mit mindestens einer Vorgabe und Ableiten einer Verifikationsentscheidung basierend auf dem Vergleichsergebnis, wobei zusätzlich folgende Schritte ausgeführt werden:
Ausführen einer Anregung des mindestens einen Gebiets (18) des Sicherheitsdokuments mit Licht, welches sich von einer Beleuchtung mit Licht im sichtbaren Wellenlängenbereich unterscheidet, und
optisches Erfassen von Stellen (82), die bei oder nach der Anregung in dem mindestens einen Gebiet (18) einen von dem Rest des Gebiets (18) abweichenden optischen Effekt in Form einer Lumineszenz, einer IR Absorption oder einer IR Remission zeigen,
Vergleichen der bei der Hologrammrekonstruktion Abweichungen zeigenden Stellen (72) mit den einen abweichenden optischen Effekt bei oder nach der Anregung zeigenden Stellen (82) und Ableiten einer Verifikationsentscheidung anhand des Vergleichs, wobei das Sicherheitsdokument als gültig verifiziert wird, wenn die bei der Hologrammrekonstruktion Abweichungen zeigenden Stellen (72) mit den einen abweichenden optischen Effekt bei oder nach der Anregung zeigenden Stellen (82) übereinstimmen.

12. Verfahren nach Anspruch 11, **dadurch gekennzeichnet, dass** das Sicherheitsdokument jedoch nur als echt klassifiziert wird, wenn die in Bezug auf die Rekonstruktion abweichenden Stellen (72) erste Bereiche und zweite Bereiche umfassen, die unterschiedliche Wellenlängen beugen, und jeweils die ersten Bereiche bei der Anregung mit dem Licht, welches sich von einer Beleuchtung mit Licht im sichtbaren Wellenlängenbereich unterscheidet, einen einheitlichen Lumineszenzeffekt zeigen und die zweiten Bereiche ebenfalls einen einheitlichen Lumineszenzeffekt zeigen, der von dem Lumineszenzeffekt der ersten Bereiche verschieden ist.

13. Verfahren nach Anspruch 11, **dadurch gekennzeichnet, dass** das Sicherheitsdokument jedoch nur als echt klassifiziert wird, wenn die Wellenlänge des von in einem ersten Bereich oder ersten Bereichen von den Stellen (72), an denen in dem mindestens einen Gebiet (18) bei der Rekonstruktion Abweichungen von einer Abbildung einer homogen leuchtenden Fläche aufgrund des Schwellen der Hologrammschicht (14) auftreten, gebeugten Lichts im Rahmen einer vorgegebenen Toleranz mit der Wellenlänge der Lumineszenzstrahlung übereinstimmt, die bei der Anregung mit dem Licht, welche sich von einer Beleuchtung mit Licht im sichtbaren Wellenlängenbereich unterscheidet, in dem oder den ersten Bereichen erzeugt wird.

14. Verfahren nach Anspruch 12, **dadurch gekennzeichnet, dass** das Sicherheitsdokument jedoch nur als echt klassifiziert wird, wenn Farbeindrücke , die sich aufgrund der Farbaddition des in dem jeweiligen Bereich gebeugten Lichts und des in dem jeweiligen Bereich bei Anregung emittierten Lumineszenzlichts hervorgerufen werden, für die ersten Bereiche im Rahmen einer vorgegebenen Toleranz gleich sind und die zweiten Bereiche im Rahmen einer weiteren vorgegebenen Toleranz gleich sind.

15. Sicherheitsdokument mit einem Dokumentkörper, der eine Hologrammschicht (14) mit einem eingespeicherten Hologramm (16) umfasst, wobei das Hologramm (16) mindestens ein Gebiet (18) umfasst, in dem vollflächig eine Abbildung einer homogen leuchtenden Fläche gespeichert ist, und wobei Stellen (72) des Gebiets (18) mit mindestens einer beim Drucken Monomere aufweisenden Druckzubereitung (32) bedruckt ist, wobei die Monomere (36) nach dem Aufdrucken vernetzt sind und wobei das Hologramm (16) an den bedruckten Stellen (72) durch in die Hologrammschicht (14) eindiffundierte und anschließend vernetzte Monomere (36) der mindestens einen Druckzubereitung (32) lokal geschwollen ist, sodass das Hologramm (16) an den Stellen (72) in dem mindestens einen Gebiet (18) aufgrund des Schwellens der Hologrammschicht (14) in einer eine Rekonstruktion des Hologramms (16) beeinflussenden Weise modifiziert ist, wobei an den Stellen (72) lokal mit den Monomeren der mindestens einen Druckzubereitung (32), die zumindest teilweise in die Hologrammschicht (14) eindiffundiert und anschließend vernetzt sind, dieser mindestens einen Druckzubereitung (32) zugefügte Pigmente eingebracht sind, welche eine Lumineszenz bei geeigneter Anregung oder eine IR-Absorption oder eine IR-Remission zeigen, wobei es sich bei dem Hologramm (16) oder zumindest bei einem Hologrammbestandteil, welcher das mindestens eine Gebiet (18) darstellt, um ein Volumenhologramm handelt.

## Claims

1. Method for marking a security document (1), comprising the steps:
providing a security document blank (10), which comprises at least on some sections of the surface, as the outermost layer, a hologram layer (14) with a hologram (16), wherein the hologram (16) comprises a region (18) over the entire surface of which an image of a homogeneous luminescent surface is stored, preferably an image of a homogeneous diffuse scatterer, wherein the hologram (16), or at least a constituent part of the hologram which represents the at least one region (18), is a volume hologram,
providing at least one printing preparation (32), which comprises UV-crosslinkable monomers (36), which in the non-crosslinked state diffuse into the completely exposed and fixed hologram layer (14),
providing a digital printing device, with which the at least one printing preparation (32) can be printed,
acquiring marking information, which indicates at which locations (72) the hologram (16) should be modified in the at least one region (18) so as to influence a reconstruction of the hologram (16) by means of a swelling of the hologram layer (14),
printing of the at least one printing preparation (32) for swelling the hologram layer (14) onto the at least one region (18) of the hologram layer (14) with the digital printing device, at the locations indicated according to the marking information, such that the locations (72) in the at least one region (18) of the hologram (16) at which a reconstruction of the hologram (16) is intended to be influenced, are printed with the at least one printing preparation (32),
fixing the crosslinkable monomers (36) of the at least one printed printing preparation (32) by introducing energy into the at least one region (18) of the hologram (16), wherein the at least one printing preparation (32) comprises pigments which exhibit luminescence under suitable excitation or IR-absorption or IR-remission.

2. Method according to claim 1, **characterised in that**, after the fixing of the monomers (36) onto the security document blank (10), a cover (50) which, at least in the region of the hologram (16), is transparent for light of the wavelength with which the hologram (16) can be reconstructed.

3. Method according to claim 1 or 2, **characterised in that** the printing with the at least one printing preparation (32) and the introducing of energy is repeated iteratively at least once, wherein a time span in the iteration cycles is differentially selected between the printing of the at least one printing preparation (32) and the fixing.

4. Method according to any one of claims 1 to 3, **characterised in that** a quantity is varied of the at least one printing preparation (32) applied per surface unit at different locations (72).

5. Method according to any one of claims 1 to 4, **characterised in that** at least one second printing preparation (34) with crosslinkable monomers is provided, which can likewise be printed with the digital printing device, wherein the at least one second printing preparation (34) comprises crosslinkable monomers (36) in a concentration deviating from that in the at least one printing preparation (32) and/or other monomers (36) than the at least one printing preparation (32), and the at least one second printing preparation (34), with the same printed quantity per surface unit, with the same effect time between the printing and the fixing, has the effect of a stronger or weaker swelling of the hologram layer than the at least one printing preparation (32), and wherein the at least one second printing preparation (34) comprises pigments which exhibit a luminescence under suitable excitation or an IR-absorption or an IR-remission.

6. Method according to claim 5, **characterised in that** the at least one printing preparation comprises first luminescence pigments, and the at least one second printing preparation comprises second luminescence pigments, wherein a luminescence of the first luminescence pigments differs from a luminescence of the second luminescence pigments.

7. Method according to claim 6, **characterised in that** in the at least one region (18) one or more first areas are modified with the at least one printing preparation in an manner influencing the reconstruction of the hologram (16) due to the swelling of the hologram layer (14) similary, and one or more second areas are modified with the at least one second printing preparation in a manner influencing the reconstruction of the hologram (16) due to the swelling of the hologram layer (14) similary, but in a manner which deviates in relation to the first area or areas.

8. Method according to claim 7, **characterised in that** the first areas are modified in such a way, and the pigments are selected in such a way, that the wavelengths of the light diffracted by the first area or first areas coincide with the wavelength of the luminescence radiation of the first pigments within the framework of a tolerance which is predetermined or can be predetermined for the verification.

9. Method according to claim 7, **characterised in that** the first areas are modified in such a way, and the pigments are selected in such a way, that with the light diffracted by the first area or the first areas, with the luminescence radiation of the first pigments, and on the basis of a colour addition, generates a mixed colour impression, and the second areas are modified in such a way, and the second pigments are selected in such a way, that the mixed colour impression generated by the first areas corresponds to the mixed colour impression which is incurred by the light diffracted in the second area or the second areas and the luminescence radiation of the second pigments incurred on the basis of the colour addition.

10. Method according to any one of claims 1 to 9, **characterised in that** at least one printing preparation (32) is applied in such a quantity that tactilely detectable elevations (52) are produced at least at some of the marked locations (72).

11. Method for verifying of a security document marked in accordance with the method according to any one of claims 1 to 10, comprising the steps:
reconstructing a hologram (16) with light in at least one predetermined region (18) and the detection of locations (72) at which, in the at least one region (18), during the reconstruction, deviations occur from an imaging of a homogeneous luminescent surface, preferably a monochromatic surface, of an illuminated or transilluminated diffuse scatterer, on the basis of a swelling of the hologram layer (14),
comparing the locations (72) exhibiting deviations with at least one predisposition and derivation of a verification decision based on the result of the comparison,
wherein the following steps are additionally carried out:
carrying out an excitation of the at least one region (18) of the security document with light, which differs from an illumination with light in the visible wavelength range, and optical detection of locations (82) which, during or after the excitation in the at least one region (18), exhibits an optical effect which differs from the remainder of the region (18) in the form of a luminescence, an IR-absorption, or an IR-remission,
comparing of the locations (72) exhibiting deviations in the hologram reconstruction with the locations (82) exhibiting a deviating optical effect during or after the excitation, and deriving a verification decision on the basis of the comparison, wherein the security document is verified as valid when the locations (72) exhibiting deviations in the hologram reconstruction coincide with the locations (82) which exhibit a deviating optical effect at or after the excitation.

12. Method according to claim 11, **characterised in that** the security document is only classified as authentic, however, when the locations (72) which deviate in relation to the reconstruction comprise first areas and second areas which diffract different wavelengths, and in each case the first areas which, on excitation with the light which differs from an illumination with light in the visible wavelength range, exhibit a uniform luminescence effect, and the second areas likewise exhibit a uniform luminescence effect which is different from the luminescence effect of the first areas.

13. Method according to claim 11, **characterised in that** the security document is only classified as authentic, however, when the wavelength of the light diffracted in a first area or first areas of the locations (72) at which, in the at least one region (18), during the reconstruction, deviations occur from an illumination of a homogeneous luminescent surface on the basis of the swelling of the hologram layer (14), coincides with the wavelength of the luminescence radiation within the framework of a predetermined tolerance range, which is produced in the first area or areas on excitation with the light which differs from an illumination with light in the visible wavelength range.

14. Method according to claim 12, **characterised in that** the security document is only classified as authentic, however, when colour impressions which are incurred on the basis of the colour addition of the light diffracted in the respective area, and of the luminescence light emitted on excitation in the respective area, are the same for the first areas within the framework of a predetermined tolerance range, and the second areas are the same within the framework of a further predetermined tolerance range.

15. Security document with a document body, which comprises a hologram layer (14) with a stored hologram (16), wherein the hologram (16) comprises at least one region (18), over the entire surface of which an image of a homogeneous luminescent surface is stored, and wherein locations (72) of the region (18) are printed with at least one printing preparation (32) comprising monomers during the printing, wherein the monomers (36) are crosslinked after the printing, and wherein the hologram (16) is swollen locally at the printed locations (72) by monomers (36), diffused into the hologram layer (14) and then crosslinked, of the at least one printing preparation (32), such that the hologram (16) is modified at the locations (72) in the at least one region (18) on the basis of the swelling of the hologram layer (14) in a manner influencing a reconstruction of the hologram (16), wherein, at the locations (72), locally with the monomers of the at least one printing preparation (32), which are diffused at least partially into the hologram layer (14) and then crosslinked, pigments added to this at least one printing preparation are introduced, which exhibit a luminescence under suitable excitation or an IR-absorption or an IR-remission, wherein the hologram (16), or at least a constituent part of the hologram which represents the at least one region (18), is a volume hologram.

## Revendications

1. Procédé de marquage d'un document de sécurité (1), ledit procédé comprenant les étapes suivantes :
fournir une ébauche de documents de sécurité (10) dont la couche la plus extérieure comprend au moins en partie une couche d'hologramme (14) pourvue d'un hologramme (16), l'hologramme (16) comprenant au moins une région (18) dans laquelle une reproduction d'une surface lumineuse homogène, de préférence une reproduction d'un diffuseur diffus homogène, est entièrement mémorisée, l'hologramme (16) ou au moins un composant d'hologramme, qui représente l'au moins une région (18), étant un hologramme volumique,
fournir au moins une préparation d'impression (32), qui comprend des monomères (36) réticulables aux UV qui diffusent, à l'état non réticulé, dans la couche d'hologramme (14) complètement exposée à la lumière et fixée,
fournir un dispositif d'impression numérique avec lequel l'au moins une préparation d'impression (32) peut être imprimée,
détecter une information de marquage qui indique à quels endroits (72) l'hologramme (16) doit être modifié dans l'au moins une région (18) par gonflement de la couche d'hologramme (14) de manière à influer sur une reconstruction de l'hologramme (16),
imprimer l'au moins une préparation d'impression (32) pour gonfler la couche d'hologramme (14) sur l'au moins une région (18) de la couche d'hologramme (14) avec le dispositif d'impression numérique aux endroits indiqués conformément à l'information de marquage de manière à imprimer avec l'au moins une préparation d'impression (32) les endroits (72) de l'au moins une région (18) de l'hologramme (16) où il faut influer sur une reconstruction de l'hologramme (16),
fixer les monomères réticulables (36) de l'au moins une préparation d'impression (32) imprimée par introduction d'énergie au moins dans l'au moins une région (18) de l'hologramme (16), l'au moins une préparation d'impression (32) comprenant des pigments qui présentent une luminescence lors d'une excitation appropriée ou une absorption IR ou une réflectance IR.

2. Procédé selon la revendication 1, **caractérisé en ce que**, après la fixation des monomères (36) sur l'ébauche de document de sécurité (10), un revêtement (50) est appliqué qui, au moins dans la région de l'hologramme (16), est transparent à la lumière de la longueur d'onde avec laquelle l'hologramme (16) peut être reconstruit.

3. Procédé selon la revendication 1 ou 2, **caractérisé en ce que** l'impression avec l'au moins une préparation d'impression (32) et l'introduction d'énergie sont répétées au moins une fois de manière itérative, un intervalle de temps entre l'impression de l'au moins une préparation d'impression (32) et la fixation étant sélectionné pour être différent dans les cycles d'itération.

4. Procédé selon l'une des revendications 1 à 3, **caractérisé en ce qu'**on fait varier une quantité de l'au moins une préparation d'impression (32) appliquée par unité de surface en différents endroits (72).

5. Procédé selon l'une des revendications 1 à 4, **caractérisé en ce qu'**au moins une deuxième préparation d'impression (34) pourvue de monomères réticulables est fournie qui peut également être imprimée avec le dispositif d'impression numérique, l'au moins une deuxième préparation d'impression (34) comportant des monomères réticulables (36) à une concentration différente de celle de l'au moins une préparation d'impression (32) et/ou d'autres monomères (36) différents de ceux de l'au moins une préparation d'impression (32) et l'au moins une deuxième préparation d'impression (34) provoquant un gonflement de la couche d'hologramme qui est plus fort ou plus faible que celui de l'au moins une préparation d'impression (32) avec la même quantité imprimée par unité de surface et le même temps d'action entre l'impression et la fixation, et l'au moins une deuxième préparation d'impression (34) comprenant des pigments qui présentent une luminescence lors d'une excitation appropriée ou une absorption IR ou une réflectance IR.

6. Procédé selon la revendication 5, **caractérisé en ce que** l'au moins une préparation d'impression comprend des premiers pigments luminescents et l'au moins une deuxième préparation d'impression comprend des deuxièmes pigments luminescents, une luminescence des premiers pigments luminescents différant d'une luminescence des deuxièmes pigments luminescents.

7. Procédé selon la revendication 6, **caractérisé en ce que**, dans l'au moins une région (18), une ou plusieurs premières zones sont modifiées avec l'au moins une préparation d'impression de façon à influer de la même manière sur la reconstruction de l'hologramme (16) en raison du gonflement de la couche d'hologramme (14) et une ou plusieurs deuxièmes zones sont modifiées avec l'au moins une deuxième préparation d'impression de façon à influer de la même manière, mais de manière différente de la première zone ou des premières zones, sur la reconstruction de l'hologramme (16) en raison du gonflement de la couche d'hologramme (14).

8. Procédé selon la revendication 7, **caractérisé en ce que** les premières zones sont modifiées, et les premiers pigments choisis, de telle sorte que la longueur d'onde de la lumière, diffractée par la première zone ou les premières zones, coïncide avec la longueur d'onde du rayonnement de luminescence des premiers pigments dans le cadre d'une tolérance spécifiée pour une vérification ou spécifiable pour la vérification.

9. Procédé selon la revendication 7, **caractérisé en ce que** les premières zones sont modifiées, et les premiers pigments choisis, de telle sorte que la lumière, diffractée par la première zone ou les premières zones, produise conjointement avec le rayonnement de luminescence des premiers pigments une impression de couleurs mélangées en raison à l'addition des couleurs, et les deuxièmes zones sont modifiées, et les deuxièmes pigments choisis, de telle sorte que l'impression de couleurs mélangées, produite par les premières zones, corresponde à l'impression de couleurs mélangées qui est provoquée par la lumière diffractée dans la deuxième zone ou les deuxièmes zones et par le rayonnement de luminescence des deuxièmes pigments en raison de l'addition de couleurs.

10. Procédé selon l'une des revendications 1 à 9, **caractérisé en ce qu'**au moins l'au moins une préparation d'impression (32) est appliquée dans une quantité telle que des élévations tactilement détectables (52) apparaissent au moins en certains des endroits marqués (72) .

11. Procédé de vérification d'un document de sécurité marqué selon l'une des revendications 1 à 10, ledit procédé comprenant les étapes suivantes :
reconstruire un hologramme (16) avec de la lumière dans au moins une région spécifiée (18) et détecter des endroits (72) où, dans l'au moins une région (18), des écarts par rapport à une reproduction d'une surface lumineuse homogène, de préférence une surface monochromatique d'un diffuseur diffus illuminé ou transilluminé, se produisent pendant la reconstruction en raison du gonflement de la couche d'hologramme (14),
comparer les endroits (72) présentant des écarts à au moins une spécification et déduire une décision de vérification sur la base du résultat de la comparaison, les étapes supplémentaires suivantes étant réalisées :
effectuer une excitation de l'au moins une région (18) du document de sécurité avec de la lumière qui diffère d'un éclairage avec une lumière dans la gamme des longueurs d'onde visibles, et
détecter optiquement des endroits (82) qui présentent, pendant ou après l'excitation, dans l'au moins une région (18) un effet optique, différant du reste de la région (18), sous la forme d'une luminescence, d'une absorption IR ou d'une réflectance IR,
comparer les endroits (72), présentant des écarts lors de la reconstruction d'hologramme, aux endroits (82) présentant un effet optique différent pendant ou après l'excitation et déduire une décision de vérification sur la base de la comparaison,
le document de sécurité étant vérifié comme valide si les endroits (72) présentant des écarts pendant la reconstruction de l'hologramme coïncident avec les endroits (82) présentant un effet optique différant pendant ou après l'excitation.

12. Procédé selon la revendication 11, **caractérisé en ce que** le document de sécurité n'est cependant classé comme authentique que si les endroits (72), différant par rapport à la reconstruction, comportent des premières zones et des deuxièmes zones qui diffractent des longueurs d'onde différentes, et les premières zones présentent à chaque fois pendant l'excitation avec la lumière, qui diffère de l'éclairage avec de la lumière dans la gamme des longueurs d'onde visibles, un effet de luminescence uniforme et les deuxièmes zones présentent également un effet de luminescence uniforme qui est différent de l'effet de luminescence des premières zones.

13. Procédé selon la revendication 11, **caractérisé en ce que** le document de sécurité n'est cependant classé comme authentique que si la longueur d'onde de la lumière diffractée dans une première zone ou des premières zones par des endroits (72) où, dans l'au moins une région (18), des écarts par rapport à une reproduction d'une surface lumineuse homogène apparaissent lors de la reconstruction en raison du gonflement de la couche d'hologramme (14), coïncide dans le cadre d'une tolérance spécifiée avec la longueur d'onde du rayonnement luminescent qui est généré dans la zone ou les zones lors de l'excitation avec la lumière, qui diffère d'un éclairage avec de la lumière dans la gamme des longueurs d'onde visibles.

14. Procédé selon la revendication 12, **caractérisé en ce que** le document de sécurité n'est cependant classé comme authentique que si des impressions de couleur, qui sont créées en raison de l'addition de couleurs de la lumière diffractée dans la région respective et de la lumière luminescente émise dans la zone respective lors de l'excitation, sont les mêmes pour les premières zones dans le cadre d'une tolérance spécifiée et pour les deuxièmes zones dans le cadre d'une autre tolérance spécifiée.

15. Document de sécurité comprenant un corps de document qui comprend une couche d'hologramme (14) pourvue d'un hologramme mémorisé (16), l'hologramme (16) comprenant au moins une région (18) dans laquelle une reproduction d'une surface lumineuse homogène est entièrement mémorisée, et des endroits (72) de la région (18) étant imprimés avec au moins une préparation d'impression (32) comportant des monomères lors de l'impression, les monomères (36) étant réticulés après l'impression et l'hologramme (16) étant localement gonflé aux endroits imprimés (72) en raison des monomères (36) de l'au moins une préparation d'impression (32), lesquels ont diffusés dans la couche d'hologramme (14) puis ont été réticulés, de manière à modifier l'hologramme (16), d'une manière qui influe sur une reconstruction de l'hologramme (16), aux endroits (72) dans l'au moins une région (18) en raison du gonflement de la couche d'hologramme (14), des pigments qui sont ajoutés à cette au moins une préparation d'impression (32) et qui produisent une luminescence lors d'une excitation appropriée ou une absorption IR ou une réflectance IR, étant introduits aux endroits (72) localement avec les monomères de l'au moins une préparation d'impression (32) qui sont diffusés au moins en partie dans la couche d'hologramme (14) et qui sont ensuite réticulés, l'hologramme (16) ou au moins un composant d'hologramme, qui représente l'au moins une région (18), étant un hologramme volumique.
